# EUROPEAN PATENT APPLICATION

(11) **EP 4 757 404 A1**
(43) Date of publication of application: **10.06.2026**
(21) Application number: 24847801.8
(22) Date of filing: 12.06.2024
(51) Int. Cl.: H04W 28/02

(54) **METHOD, TERMINAL AND APPARATUS FOR EXITING CONGESTION MANAGEMENT STATE, AND STORAGE MEDIUM**

(30) Priority: 28.07.2023 CN 202310946618
(71) Applicant: Datang Mobile Communications Equipment Co., Ltd., Beijing 100085 (CN)
(72) Inventor: ZHAO, Yali, Beijing 100085 (CN); BERTRAND, Pierre, Beijing 100085 (CN); CHEN, Li, Beijing 100085 (CN)
(74) Representative: Ipsilon
(86) International application number: PCT/CN2024/098653
(87) International publication number: WO 2025/025838

(57) **Abstract**

Embodiments of the present disclosure provide a method for exiting a congestion management state, a terminal, an apparatus, and a storage medium. The method comprises: on the basis of first indication information sent by a network device, determining to exit a congestion management state; or when a preset condition is met, determining to exit the congestion management state, wherein the first indication information is used for indicating a congestion state of a network, or the first indication information is used for instructing a terminal to exit the congestion management state.

## Description

### CROSS-REFERENCES TO RELATED APPLICATIONS

The present application claims priority to the Chinese patent application No.202310946618.6, filed on July 28, 2023, entitled "Method, terminal and apparatus for exiting congestion management state, and storage medium", which is incorporated herein by reference in its entirety.

### FIELD

The present application relates to the field of communication, and in particular to a method, a terminal, and an apparatus for exiting a congestion management state, and a storage medium.

### BACKGROUND

Extended Reality (XR) encompasses three representative forms of Augmented Reality (AR), Mixed Reality (MR), and Virtual Reality (VR). XR refers to a human-computer interaction environment that combines the real and virtual worlds generated through computer technology and wearable devices.

For a terminal such as User Equipment (UE) that supports XR service, if a network is congested, the terminal will discard data based on Packet Data Unit Set Importance (PSI), that is, the terminal is in a congestion management state.

Currently, how the terminal exits the congestion management state is an urgent problem to be solved.

### BRIEF SUMMARY

For the above-mentioned problem existing in the related art, there is provided a method, a terminal, and an apparatus for exiting a congestion management state, and a storage medium according to embodiments of the present application.

According to an embodiment of the present application, there is provided a method for exiting a congestion management state, including:
determining to exit the congestion management state based on first indication information transmitted from a network device; or
determining to exit the congestion management state in a case where a given condition is met,
where the first indication information is configured to indicate a congestion state of a network, or the first indication information is configured to indicate a terminal to exit the congestion management state.

In an embodiment, the given condition includes at least one of:
a volume of data in a current buffer is less than a first given threshold, or a volume of data in a current buffer is less than or equal to a first given threshold, where the first given threshold is predefined by a protocol or configured by the network device; or
an uplink grant transmitted from the network device has been received within a given time period.

In an embodiment, the volume of data in the current buffer is:
a total volume of data in the current buffer; or
a volume of data in the current buffer corresponding to a logical channel or a logical channel group with a highest priority; or
a total volume of data in the current buffer corresponding to a logical channel or a logical channel group containing a packet data unit set; or
a volume of data in the current buffer corresponding to a logical channel or a logical channel group with a highest priority containing a packet data unit set.

In an embodiment, determining to exit the congestion management state based on the first indication information transmitted from the network device in the case where the first indication information is configured to indicate the congestion state of the network, includes at least one of:
determining to exit the congestion management state in a case where the first indication information indicates that the congestion state of the network is non-congested;
determining to exit the congestion management state in a case where the first indication information indicates that total resource occupancy of all serving cells accessed by the terminal is less than a second given threshold, or the first indication information indicates that total resource occupancy of all serving cells accessed by the terminal is less than or equal to a second given threshold;
determining to exit the congestion management state in a case where the first indication information indicates that average resource occupancy of all serving cells accessed by the terminal is less than a third given threshold, or the first indication information indicates that average resource occupancy of all serving cells accessed by the terminal is less than or equal to a third given threshold;
determining to exit the congestion management state in a case where the first indication information indicates resource occupancy of each serving cell accessed by the terminal, and it is determined based on the first indication information that total resource occupancy of all serving cells accessed by the terminal is less than a second given threshold, or it is determined based on the first indication information that total resource occupancy of all serving cells accessed by the terminal is less than or equal to a second given threshold;
determining to exit the congestion management state in a case where the first indication information indicates resource occupancy of each serving cell accessed by the terminal, and it is determined based on the first indication information that average resource occupancy of all serving cells accessed by the terminal is less than a third given threshold, or it is determined based on the first indication information that average resource occupancy of all serving cells accessed by the terminal is less than or equal to a third given threshold; or
determining to exit the congestion management state in a case where the first indication information indicates resource occupancy of each serving cell accessed by the terminal, and resource occupancy of at least one serving cell in all serving cells accessed by the terminal is less than a fourth given threshold, or resource occupancy of at least one serving cell in all serving cells accessed by the terminal is less than or equal to a fourth given threshold,
where the second given threshold is predefined by a protocol or configured by the network device, the third given threshold is predefined by a protocol or configured by the network device, and the fourth given threshold is predefined by a protocol or configured by the network device.

In an embodiment, exiting the congestion management state includes at least one of:
ceasing data discard based on packet data unit set importance;
ceasing data discard based on packet data unit set importance for target service;
ceasing data discard based on packet data unit importance for a target quality of service flow; or
ceasing data discard based on packet data unit importance for a target radio bearer or a logical channel.

In an embodiment, the method further includes:
performing data discard based on a first packet data unit set importance threshold,
where the first packet data unit set importance threshold is predefined by a protocol or configured by the network device.

In an embodiment, a content of the first indication information includes at least one of:
total resource occupancy of all serving cells accessed by the terminal;
average resource occupancy of all serving cells accessed by the terminal;
resource occupancy of each serving cell accessed by the terminal;
1-bit information, configured to indicate the congestion state of the network;
N-bit information, each bit of which is configured to indicate a congestion state of a serving cell accessed by the terminal; or
a second packet data unit set importance threshold.

In an embodiment, determining to exit the congestion management state based on the first indication information transmitted from the network device in the case where the first indication information includes the second packet data unit set importance threshold, includes at least one of:
determining to exit the congestion management state in a case where packet data unit set importance of a target quality of service flow is less than the second packet data unit set importance threshold, or packet data unit set importance of a target quality of service flow is less than or equal to the second packet data unit set importance threshold; or
determining to exit the congestion management state in a case where packet data unit set importance corresponding to all logical channels or radio bearers in the terminal is less than the second packet data unit set importance threshold, or packet data unit set importance corresponding to all logical channels or radio bearers in the terminal is less than or equal to the second packet data unit set importance threshold.

In an embodiment, the second packet data unit set importance threshold is the same as the first packet data unit set importance threshold.

In an embodiment, being configured by the network device includes:
being configured by a radio resource control signaling, a medium access control-control element signaling, or a physical layer signaling transmitted from the network device.

According to an embodiment of the present application, there is further provided a terminal including a memory, a transceiver, and a processor, where
the memory is configured to store a computer program; the transceiver is configured to transmit and receive data under control of the processor; and the processor is configured to read the computer program from the memory and perform operations of:
determining to exit a congestion management state based on first indication information transmitted from a network device; or
determining to exit a congestion management state in a case where a given condition is met,
where the first indication information is configured to indicate a congestion state of a network, or the first indication information is configured to indicate the terminal to exit the congestion management state.

In an embodiment, the given condition includes at least one of:
a volume of data in a current buffer is less than a first given threshold, or a volume of data in a current buffer is less than or equal to a first given threshold, where the first given threshold is predefined by a protocol or configured by the network device; or
an uplink grant transmitted from the network device has been received within a given time period.

In an embodiment, the volume of data in the current buffer is:
a total volume of data in the current buffer; or
a volume of data in the current buffer corresponding to a logical channel or a logical channel group with a highest priority; or
a total volume of data in the current buffer corresponding to a logical channel or a logical channel group containing a packet data unit set; or
a volume of data in the current buffer corresponding to a logical channel or a logical channel group with a highest priority containing a packet data unit set.

In an embodiment, determining to exit the congestion management state based on the first indication information transmitted from the network device in the case where the first indication information is configured to indicate the congestion state of the network, includes at least one of:
determining to exit the congestion management state in a case where the first indication information indicates that the congestion state of the network is non-congested;
determining to exit the congestion management state in a case where the first indication information indicates that total resource occupancy of all serving cells accessed by the terminal is less than a second given threshold, or the first indication information indicates that total resource occupancy of all serving cells accessed by the terminal is less than or equal to a second given threshold;
determining to exit the congestion management state in a case where the first indication information indicates that average resource occupancy of all serving cells accessed by the terminal is less than a third given threshold, or the first indication information indicates that average resource occupancy of all serving cells accessed by the terminal is less than or equal to a third given threshold;
determining to exit the congestion management state in a case where the first indication information indicates resource occupancy of each serving cell accessed by the terminal, and it is determined based on the first indication information that total resource occupancy of all serving cells accessed by the terminal is less than a second given threshold, or it is determined based on the first indication information that total resource occupancy of all serving cells accessed by the terminal is less than or equal to a second given threshold;
determining to exit the congestion management state in a case where the first indication information indicates resource occupancy of each serving cell accessed by the terminal, and it is determined based on the first indication information that average resource occupancy of all serving cells accessed by the terminal is less than a third given threshold, or it is determined based on the first indication information that average resource occupancy of all serving cells accessed by the terminal is less than or equal to a third given threshold; or
determining to exit the congestion management state in a case where the first indication information indicates resource occupancy of each serving cell accessed by the terminal, and resource occupancy of at least one serving cell in all serving cells accessed by the terminal is less than a fourth given threshold, or resource occupancy of at least one serving cell in all serving cells accessed by the terminal is less than or equal to a fourth given threshold,
where the second given threshold is predefined by a protocol or configured by the network device, the third given threshold is predefined by a protocol or configured by the network device, and the fourth given threshold is predefined by a protocol or configured by the network device.

In an embodiment, exiting the congestion management state includes at least one of:
ceasing data discard based on packet data unit set importance;
ceasing data discard based on packet data unit set importance for target service;
ceasing data discard based on packet data unit importance for a target quality of service flow; or
ceasing data discard based on packet data unit importance for a target radio bearer or a logical channel.

In an embodiment, the processor is configured to read the computer program in the memory and further perform operation of:
performing data discard based on a first packet data unit set importance threshold,
where the first packet data unit set importance threshold is predefined by a protocol or configured by the network device.

In an embodiment, a content of the first indication information includes at least one of:
total resource occupancy of all serving cells accessed by the terminal;
average resource occupancy of all serving cells accessed by the terminal;
resource occupancy of each serving cell accessed by the terminal;
1-bit information, configured to indicate the congestion state of the network;
N-bit information, each bit of which is configured to indicate a congestion state of a serving cell accessed by the terminal; or
a second packet data unit set importance threshold.

In an embodiment, determining to exit the congestion management state based on the first indication information transmitted from the network device in the case where the first indication information includes the second packet data unit set importance threshold, includes at least one of:
determining to exit the congestion management state in a case where packet data unit set importance of a target quality of service flow is less than the second packet data unit set importance threshold, or packet data unit set importance of a target quality of service flow is less than or equal to the second packet data unit set importance threshold; or
determining to exit the congestion management state in a case where packet data unit set importance corresponding to all logical channels or radio bearers in the terminal is less than the second packet data unit set importance threshold, or packet data unit set importance corresponding to all logical channels or radio bearers in the terminal is less than or equal to the second packet data unit set importance threshold.

In an embodiment, the second packet data unit set importance threshold is the same as the first packet data unit set importance threshold.

In an embodiment, being configured by the network device includes:
being configured by a radio resource control signaling, a medium access control-control element signaling, or a physical layer signaling transmitted from the network device.

According to an embodiment of the present application, there is further provided an apparatus for exiting a congestion management state, including:
a first determination unit, configured to determine to exit the congestion management state based on first indication information transmitted from a network device; or
a second determination unit, configured to determine to exit the congestion management state in a case where a given condition is met,
where the first indication information is configured to indicate a congestion state of a network, or the first indication information is configured to indicate a terminal to exit the congestion management state.

According to an embodiment of the present application, there is further provided a processor-readable storage medium storing a computer program which is configured to cause a processor to execute the method for exiting a congestion management state as described above.

According to an embodiment of the present application, there is further provided a non-transitory readable storage medium storing a computer program which is configured to cause a computer to execute the method for exiting a congestion management state as described above.

According to an embodiment of the present application, there is further provided a communication device storing a computer program which is configured to cause the communication device to execute the method for exiting a congestion management state as described above.

According to an embodiment of the present application, there is further provided a chip product storing a computer program which is configured to cause the chip product to execute the method for exiting a congestion management state as described above.

According to an embodiment of the present application, there is provided a method, a terminal, and an apparatus for exiting a congestion management state, and a storage medium. The terminal determines to exit the congestion management state based on first indication information transmitted from a network device, or the terminal determines to exit the congestion management state in a case where a given condition is met. It is ensured that, when the network is no longer congested, the terminal ceases data discard based on the PSI, thereby avoiding unnecessary data discard and improving user experience.

### BRIEF DESCRIPTION OF THE DRAWINGS

In order to clearly illustrate the solutions in the embodiments of the present application or the related art, the accompanying drawings used in the description of the embodiments or the related art are briefly introduced below. It should be noted that the drawings in the following description are only some embodiments of the present application. For those of ordinary skill in the art, other drawings may be obtained based on these drawings without creative effort.
FIG. 1 is a schematic diagram illustrating modeling of a data frame in XR service according to the related art;
FIG. 2 is a schematic diagram illustrating the relationship between a frame and a Packet Data Unit (PDU) in XR service according to the related art;
FIG. 3 is a flow chart of a method for exiting a congestion management state according to an embodiment of the present application;
FIG. 4 is a structural schematic diagram of a terminal according to an embodiment of the present application; and
FIG. 5 is a structural schematic diagram of an apparatus for exiting a congestion management state according to an embodiment of the present application.

### DETAILED DESCRIPTION

To better describe the solutions in the embodiments of the present application, relevant knowledge will be introduced below.

For a terminal that supports Extended Reality (XR) service, if a network is congested, the terminal will discard data based on the PSI. For ease of description, the state in which the terminal performs data discard based on the PSI is referred to as a congestion management state.

XR and Cloud Gaming (CG), as one of the most important 5G media applications, require low latency, high throughput, and high reliability, and require the transmission of large volumes of data in a short period of time. XR is a general term for different types of reality, referring to all human-computer interaction environments that combine the real and virtual worlds generated through computer technology and devices. It encompasses various representative forms such as Augmented Reality (AR), Mixed Reality (MR), and Virtual Reality (VR).

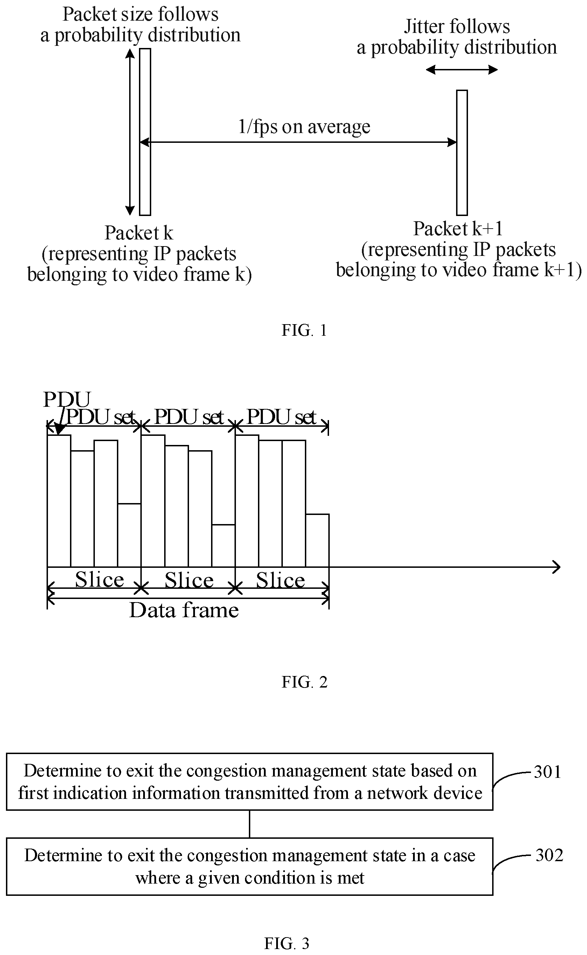

FIG. 1 is a schematic diagram illustrating modeling of a data frame in XR service according to the related art. As shown in FIG. 1, the XR service is modeled according to the data frame. For example, each data frame corresponds to one XR data frame, and a same data frame may be divided into one or more Packet Data Unit (PDU) Sets (PDU Sets).

FIG. 2 is a structural schematic diagram of a data frame in XR service according to the related art. As shown in FIG. 2, a data frame may be divided into one or more PDU Sets, and one PDU Set contains multiple PDUs. In the present application, the data frame is equivalent to a data burst, which refers to a phenomenon that a large volume of data is generated suddenly within a specific time period.

Some characteristics of the XR service are as follows:
(1) the video frame rate supports 15, 30, 60, 90, and 120 fps (frames per second) with the corresponding frame period being 66.6 ms, 33.3 ms, 16.66 ms, 11.11 ms, and 8.33 ms, respectively;
(2) the arrival time of frames has unpredictable jitter;
(3) the requirement for time delay is 10 ms or in the range of 7 to 15 ms;
(4) the bit rate ranges from 10 to 200 Mbps (megabits per second); and
(5) PDU Set QoS (Quality of Service). The parameters of PDU Set QoS include at least:
   ① PDU Set Error Rate (PSER), which represents the proportion of PDUs in a PDU set that have errors;
   ② PDU Set Delay Budget (PSDB), which represents the maximum delay allowed for transmitting a PDU Set;
   ③ PDU Set Integrated Indication (PSII), which is configured to indicate whether an application layer needs to use all PDUs in this PDU Set.

If a network is in a congested state, a terminal needs to perform data discard based on the PSI, that is, the terminal is in a congestion management state. Currently, how the terminal exits the congestion management state is an urgent problem to be solved.

For the above-mentioned problem existing in the related art, there is provided a method, a terminal, and an apparatus for exiting a congestion management state, and a storage medium according to embodiments of the present application. The terminal determines to exit the congestion management state based on first indication information transmitted from a network device, or the terminal determines to exit the congestion management state in a case where a given condition is met. It is ensured that, when the network is no longer congested, the terminal ceases data discard based on the PSI, thereby avoiding unnecessary data discard and improving user experience.

In the embodiments of the present application, the term "and/or" describes the association relationship of associated objects, indicating that three relationships may exist. For example, A and/or B may represent three situations: A exists alone, A and B exist at the same time, and B exists alone. The character "/" generally indicates that the previous and next associated objects are in an "or" relationship.

In the embodiments of the application, the term "multiple" refers to two or more, and other quantifiers are similar thereto.

In the embodiments of the present application, "determine B based on A" means that the factor A should be considered when determining B and it is not limited to "determine B based on A alone". It should also include: "determine B based on A and C", "determine B based on A, C and E", "determine C based on A, and further determine B based on C", and the like. It may also include taking A as a condition for determining B. For example, "When A meets a first condition, use a first method to determine B". For example, "When A meets a second condition, determine B", and the like. For example, "When A meets a third condition, determine B based on a first parameter", and the like. Of course, it may also be a condition that takes A as a factor for determining B. For example, "When A meets a first condition, use a first method to determine C, and further determine B based on C", and the like.

The solutions provided by the embodiments of the present application may be applied to a variety of systems, particularly to 5G systems, 5G Advanced systems, 6G systems, and evolved systems thereof. For example, the applicable system may include the Global System of Mobile Communication (GSM) system, the Code Division Multiple Access (CDMA) system, the Wideband Code Division Multiple Access (WCDMA) General Packet Radio Service (GPRS) system, the Long Term Evolution (LTE) system, the LTE Frequency Division Duplex (FDD) system, the LTE Time Division Duplex (TDD) system, the Long Term Evolution Advanced (LTE-A) system, the Universal Mobile Telecommunication System (UMTS), the Worldwide Interoperability for Microwave Access (WiMAX) system, and the 5G New Radio (NR) system. These various systems each include both terminal devices and network devices. The system may also include core network parts, such as the Evolved Packet System (EPS) and the 5G System (5GS).

The terminal device in the embodiments of the present application may refer to a device that provides voice and/or data connectivity to a user, a handheld device with radio connectivity, or other processing device connected to a radio modem, and the like. The name of the terminal device may vary in different systems. For example, in 5G systems, a terminal device may be referred to as a User Equipment (UE). A radio terminal device may communicate with one or more Core Networks (CNs) via a Radio Access Network (RAN). The radio terminal device may be a mobile terminal device, such as a mobile phone (also known as a "cellular" phone), or a computer with a mobile terminal device. For example, it may be a portable, pocket-sized, handheld, computer-built-in, or in-vehicle mobile device that exchanges voice and /or data with the radio access network. Examples include a Personal Communication Service (PCS) phone, a cordless phone, a Session Initiated Protocol (SIP) phone, a Wireless Local Loop (WLL) station, a Personal Digital Assistant (PDA), and the like. The radio terminal device may also be referred to as a system, a Subscriber Unit, a Subscriber Station, a Mobile Station, a Mobile, a Remote Station, an Access Point, a Remote Terminal, an Access Terminal, a User Terminal, a User Agent, or a User Device, but is not limited thereto in the embodiments of the present application.

The network device involved in the embodiments of the present application may be a base station, which may include multiple cells providing services to terminals. Depending on the specific application scenario, a base station may also be referred to as an access point or may be a device in an access network that communicates with a radio terminal device via one or more sectors over an air interface, or may be referred to as other names. The network device may be used to interchange received air frames with Internet Protocol (IP) packets, acting as a router between the radio terminal device and the rest of the access network, which may include an IP communication network. The network device may also coordinate attribute management for the air interface. For example, the network device in the embodiments of the present application may be a Base Transceiver Station (BTS) in the GSM or the CDMA, a NodeB in the WCDMA, an Evolutionary Node B (eNB or e-NodeB) in the LTE system, a 5G base station (gNB) in the Next Generation System, a Home evolved NodeB (HeNB), a Relay Node, a Femto, a Pico, or the like, but is not limited thereto in the embodiments of the present application. In some network structures, the network device may include a Centralized Unit (CU) node and a Distributed Unit (DU) node, which may also be geographically separated.

The network device and the terminal device may each use one or more antennas for Multiple Input Multiple Output (MIMO) transmission. The MIMO transmission may be either a Single-User MIMO (SU-MIMO) or a Multi-User MIMO (MU-MIMO). Depending on the form and number of antenna combinations, the MIMO transmission may be a 2D-MIMO, a 3D-MIMO, an FD-MIMO, or a massive-MIMO, and may also be diversity transmission, precoding transmission, or beamforming transmission.

The solutions in the embodiments of the present application will be clearly and completely described below in conjunction with the drawings in the embodiments of the present application. The described embodiments are only part of the embodiments of the present application, not all of the embodiments. Based on the embodiments in the present application, all other embodiments obtained by those of ordinary skill in the art without creative effort are within the protection scope of the present application.

FIG. 3 is a flow chart of a method for exiting a congestion management state according to an embodiment of the present application. As shown in FIG. 3, the method is performed by a terminal, and the method includes at least the following steps.
At step 301, determine to exit the congestion management state based on first indication information transmitted from a network device.
Or, at step 302, determine to exit the congestion management state in a case where a given condition is met.
Herein, the first indication information is configured to indicate a congestion state of a network, or the first indication information is configured to indicate the terminal to exit the congestion management state.

In an embodiment, the terminal determines to exit the congestion management state, which may be implemented as follows.

In an embodiment, the terminal determines to exit the congestion management state based on the first indication information transmitted from the network side. In an embodiment, the first indication information may be configured to indicate the congestion state of the network, and the terminal determines whether to exit the congestion management state based on the congestion state of the network. In an embodiment, if the network is in a non-congested state, the terminal exits the congestion management state. In an embodiment, if the network is in a congested state, the terminal does not need to exit the congestion management state. In an embodiment, the first indication information may directly indicate the terminal to exit the congestion management state.

In an embodiment, the terminal may independently determine to exit the congestion management state in a case where a given condition is met. In addition to the first indication information transmitted from the network side, the terminal may also determine whether to exit the congestion management state based on its own indicators or parameters.

According to an embodiment of the present application, there is provided a method for exiting a congestion management state. The terminal determines to exit the congestion management state based on first indication information transmitted from a network device, or the terminal determines to exit the congestion management state in a case where a given condition is met. It is ensured that, when the network is no longer congested, the terminal ceases data discard based on the PSI, thereby avoiding unnecessary data discard and improving user experience.

In some embodiments, the given condition includes at least one of:
a volume of data in a current buffer is less than a first given threshold, or a volume of data in a current buffer is less than or equal to a first given threshold, where the first given threshold is predefined by a protocol or configured by the network device; or
an uplink grant transmitted from the network device has been received within a given time period.

In an embodiment, the terminal may independently determine to exit the congestion management state in a case where a given condition is met, which may be implemented by at least one of the following.

In an embodiment, if the volume of data in the current buffer is less than the first given threshold, the terminal determines that the given condition is met and exits the congestion management state.

In an embodiment, if the volume of data in the current buffer is less than or equal to the first given threshold, the terminal determines that the given condition is met and exits the congestion management state.

In an embodiment, the first given threshold is predefined by the protocol or configured by the network device. The first given threshold may be configured by a radio resource control (RRC) signaling, a Medium Access Control-Control Element (MAC CE), or a physical layer signaling transmitted from the network device.

In an embodiment, the volume of data in the current buffer is a total volume of data in the current buffer.

In an embodiment, the volume of data in the current buffer is a volume of data in the current buffer corresponding to a logical channel or a logical channel group with a highest priority.

In an embodiment, the volume of data in the current buffer is a total volume of data in the current buffer corresponding to a logical channel or a logical channel group containing a PDU Set.

In an embodiment, the volume of data in the current buffer is a volume of data in the current buffer corresponding to a logical channel or a logical channel group with a highest priority containing a PDU Set.

In an embodiment, the terminal determines to exit the congestion management state after having received an uplink (UL) grant (UL Grant) transmitted from the network device within a given time period. The given time period may be a certain time period in the past.

For example, the terminal receives an uplink grant transmitted from the network device during the time period of [M-T, M], where M is the current time and T is an integer greater than or equal to 0. The value of T may be predefined by the protocol or configured by the network device.

According to an embodiment of the present application, there is provided a method for exiting a congestion management state. The terminal determines whether to exit the congestion management state based on the difference between the volume of data in the current buffer and the first given threshold, or the terminal determines whether to exit the congestion management state based on whether it receives an uplink grant transmitted from the network device within a given time period. It is ensured that, when the network is no longer congested, the terminal ceases data discard based on the PSI, thereby avoiding unnecessary data discard and improving user experience.

In some embodiments, determining to exit the congestion management state based on the first indication information transmitted from the network device in the case where the first indication information is configured to indicate the congestion state of the network, includes at least one of:
determining to exit the congestion management state in a case where the first indication information indicates that the congestion state of the network is non-congested;
determining to exit the congestion management state in a case where the first indication information indicates that total resource occupancy of all serving cells accessed by the terminal is less than a second given threshold, or the first indication information indicates that total resource occupancy of all serving cells accessed by the terminal is less than or equal to a second given threshold;
determining to exit the congestion management state in a case where the first indication information indicates that average resource occupancy of all serving cells accessed by the terminal is less than a third given threshold, or the first indication information indicates that average resource occupancy of all serving cells accessed by the terminal is less than or equal to a third given threshold;
determining to exit the congestion management state in a case where the first indication information indicates resource occupancy of each serving cell accessed by the terminal, and it is determined based on the first indication information that total resource occupancy of all serving cells accessed by the terminal is less than a second given threshold, or it is determined based on the first indication information that total resource occupancy of all serving cells accessed by the terminal is less than or equal to a second given threshold;
determining to exit the congestion management state in a case where the first indication information indicates resource occupancy of each serving cell accessed by the terminal, and it is determined based on the first indication information that average resource occupancy of all serving cells accessed by the terminal is less than a third given threshold, or it is determined based on the first indication information that average resource occupancy of all serving cells accessed by the terminal is less than or equal to a third given threshold; or
determining to exit the congestion management state in a case where the first indication information indicates resource occupancy of each serving cell accessed by the terminal, and resource occupancy of at least one serving cell in all serving cells accessed by the terminal is less than a fourth given threshold, or resource occupancy of at least one serving cell in all serving cells accessed by the terminal is less than or equal to a fourth given threshold,
where the second given threshold is predefined by a protocol or configured by the network device, the third given threshold is predefined by a protocol or configured by the network device, and the fourth given threshold is predefined by a protocol or configured by the network device.

In an embodiment, the terminal determines to exit the congestion management state based on the first indication information transmitted from the network side to indicate the congestion state of the network, which may be implemented by at least one of the following.

① The first indication information indicates that the congestion state of the network is non-congested (or idle). The terminal determines to exit the congestion management state based on the first indication information. In an embodiment, when the congestion state of the network is indicated as congested on the network side, the terminal does not need to exit the congestion management state.

② The first indication information indicates that the total resource occupancy of all serving cells accessed by the terminal is less than the second given threshold, or the first indication information indicates that the total resource occupancy of all serving cells accessed by the terminal is less than or equal to the second given threshold. The terminal determines to exit the congestion management state based on the first indication information.

In an embodiment, in the case where the first indication information is configured to indicate the terminal to exit the congestion management state, the network side determines whether the terminal needs to exit the congestion management state based on the difference between the total resource occupancy of all serving cells accessed by the terminal and the second given threshold. If necessary, the terminal will receive the first indication information transmitted from the network side to indicate the terminal to exit the congestion management state.

In an embodiment, the second given threshold is predefined by the protocol or configured by the network device. The second given threshold may be configured through RRC signaling, MAC CE signaling, or physical layer signaling.

③ The first indication information indicates that the average resource occupancy of all serving cells accessed by the terminal is less than the third given threshold, or the first indication information indicates that the average resource occupancy of all serving cells accessed by the terminal is less than or equal to the third given threshold. The terminal determines to exit the congestion management state based on the first indication information.

In an embodiment, in the case where the first indication information is configured to indicate the terminal to exit the congestion management state, the network side determines whether the terminal needs to exit the congestion management state based on the difference between the average resource occupancy of all serving cells accessed by the terminal and the third given threshold. If necessary, the terminal will receive the first indication information transmitted from the network side to indicate the terminal to exit the congestion management state.

In an embodiment, the third given threshold is predefined by the protocol or configured by the network device. The third given threshold may be configured through RRC signaling, MAC CE signaling, or physical layer signaling.

④ The first indication information indicates the resource occupancy of each serving cell accessed by the terminal. The terminal determines to exit the congestion management state in the case where it is determined based on the first indication information that the total resource occupancy of all serving cells accessed by the terminal is less than the second given threshold, or it is determined based on the first indication information that the total resource occupancy of all serving cells accessed by the terminal is less than or equal to the second given threshold.

In an embodiment, the second given threshold is predefined by the protocol or configured by the network device. The second given threshold may be configured through RRC signaling, MAC CE signaling, or physical layer signaling.

⑤ The first indication information indicates the resource occupancy of each serving cell accessed by the terminal. The terminal determines to exit the congestion management state in the case where it is determined based on the first indication information that the average resource occupancy of all serving cells accessed by the terminal is less than the third given threshold, or it is determined based on the first indication information that the average resource occupancy of all serving cells accessed by the terminal is less than or equal to the third given threshold.

In an embodiment, the third given threshold is predefined by the protocol or configured by the network device. The third given threshold may be configured through RRC signaling, MAC CE signaling, or physical layer signaling.

⑥ The first indication information indicates the resource occupancy of each serving cell accessed by the terminal.

In an embodiment, the terminal determines to exit the congestion management state in a case where the resource occupancy of at least one serving cell in all serving cells accessed by the terminal is less than the fourth given threshold. In an embodiment, if the resource occupancy of each serving cell accessed by the terminal is greater than or equal to the fourth given threshold, it is indicated that the network is in a congested state.

In an embodiment, the terminal determines to exit the congestion management state in a case where the resource occupancy of at least one serving cell in all serving cells accessed by the terminal is less than or equal to the fourth given threshold. In an embodiment, if the resource occupancy of each serving cell accessed by the terminal is greater than the fourth given threshold, it is indicated that the network is in a congested state.

In an embodiment, the fourth given threshold is predefined by the protocol or configured by the network device. The fourth given threshold may be configured through RRC signaling, MAC CE signaling, or physical layer signaling.

According to an embodiment of the present application, there is provided a method for exiting a congestion management state. The terminal determines whether to exit the congestion management state based on the resource occupancy of the serving cells accessed by the terminal indicated by the network side. It is ensured that, when the network is no longer in a congested state, the terminal ceases data discard based on the PSI, thereby avoiding unnecessary data discard and improving user experience.

In some embodiments, exiting the congestion management state includes at least one of:
ceasing data discard based on packet data unit set importance;
ceasing data discard based on packet data unit set importance for target service;
ceasing data discard based on packet data unit importance for a target quality of service flow; or
ceasing data discard based on packet data unit importance for a target radio bearer or a logical channel.

In an embodiment, the terminal exits the congestion management state, which may be implemented by at least one of the following.

① The terminal ceases data discard based on the PSI.

② For the target service, the terminal ceases data discard based on the PSI. In an embodiment, the target service is XR service.

③ For the target QoS flow, the terminal ceases data discard based on the PSI.

④ For the target Radio Bearer (RB) or Logical Channel (LC), the terminal ceases data discard based on the PSI.

In an embodiment, data discard is the discarding of PDU Sets.

In the present application, the target has the same meaning as "specified" or "specific". For example, the target service may refer to specified service or specific service. The target quality of service flow may refer to a specified quality of service flow or a specific quality of service flow. The target radio bearer or logical channel may refer to a specified radio bearer or logical channel or a specific radio bearer or logical channel.

According to an embodiment of the present application, there is provided a method for exiting a congestion management state. The terminal exits the congestion management state, i.e., ceases data discard based on the PSI, which ensures that when the network is no longer congested, the terminal ceases data discard based on the PSI, thereby avoiding unnecessary data discard and improving user experience.

In some embodiments, the method for exiting the congestion management state further includes:
performing data discard based on a first packet data unit set importance threshold,
where the first packet data unit set importance threshold is predefined by a protocol or configured by the network device.

In an embodiment, before exiting the congestion management state, the terminal needs to first enter the congestion management state.

In an embodiment, the terminal performs data discard based on the first PSI threshold. The first PSI threshold is predefined by the protocol or configured by the network device. In an embodiment, the first PSI threshold may be configured through RRC signaling, MAC CE signaling, or physical layer signaling.

When the network is congested, the terminal performs data discard based on the first PSI threshold. For example, in the case where the network is congested, the terminal discards PDU Sets with PSI values greater than the first PSI threshold. For example, in the case where the network is congested, the terminal discards PDU Sets with PSI values greater than or equal to the first PSI threshold.

In some embodiments, a content of the first indication information includes at least one of:
total resource occupancy of all serving cells accessed by the terminal;
average resource occupancy of all serving cells accessed by the terminal;
resource occupancy of each serving cell accessed by the terminal;
1-bit information, configured to indicate the congestion state of the network;
N-bit information, each bit of which is configured to indicate a congestion state of a serving cell accessed by the terminal; or
a second packet data unit set importance threshold.

In an embodiment, the content of the first indication information may include at least one of the resource occupancy of the serving cell accessed by the terminal, the congestion state of the network, and the PSI threshold.

In an embodiment, the first indication information includes the total resource occupancy of all serving cells accessed by the terminal.

In an embodiment, the first indication information includes the average resource occupancy of all serving cells accessed by the terminal.

In an embodiment, the first indication information includes the resource occupancy of each serving cell accessed by the terminal.

In an embodiment, the first indication information is 1-bit information configured to indicate the congestion state of the network. For example, if the value of the bit is "1", it is indicated that the network is congested, and the value of "0" indicates that the network is non-congested. For example, if the value of the bit is "1", it is indicated that the network is non-congested, and the value of "0" indicates that the network is congested.

In an embodiment, the first indication information contains N-bit information, where each bit in the N-bit information is configured to indicate the congestion state of a serving cell accessed by the terminal. In an embodiment, the quantity of N is equal to the number of serving cells accessed by the terminal.

In an embodiment, the congestion state may be either congested or non-congested.

In an embodiment, the first indication information includes a second PSI threshold.

In an embodiment, the second PSI threshold is predefined by the protocol or configured by the network device. In an embodiment, the second PSI threshold may be configured through RRC signaling, MAC CE signaling, or physical layer signaling.

In an embodiment, the second PSI threshold is the same as the first PSI threshold.

In an embodiment, the second PSI threshold is different from the first PSI threshold.

In some embodiments, determining to exit the congestion management state based on the first indication information transmitted from the network device in the case where the first indication information includes the second packet data unit set importance threshold, includes at least one of:
determining to exit the congestion management state in a case where packet data unit set importance of a target quality of service flow is less than the second packet data unit set importance threshold, or packet data unit set importance of a target quality of service flow is less than or equal to the second packet data unit set importance threshold; or
determining to exit the congestion management state in a case where packet data unit set importance corresponding to all logical channels or radio bearers in the terminal is less than the second packet data unit set importance threshold, or packet data unit set importance corresponding to all logical channels or radio bearers in the terminal is less than or equal to the second packet data unit set importance threshold.

In an embodiment, if the first indication information indicates the second PSI threshold, the terminal determines to exit the congestion management state based on the first indication information, which may be implemented by at least one of the following.

① The terminal compares the PSI of the target QoS flow with the second PSI threshold. If the PSI of the target QoS flow is less than the second PSI threshold, or if the PSI of the target QoS flow is less than or equal to the second PSI threshold, it is indicated that the network is no longer congested. The terminal exits the congestion management state and ceases data discard based on the PSI for the target QoS flow. In an embodiment, for a data bearer containing the target QoS flow, the terminal ceases data discard based on the PSI.

② The terminal compares the PSI of all radio bearers or logical channels with the second PSI threshold. If the PSI of all radio bearers or logical channels of the terminal is less than the second PSI threshold, or if the PSI of all radio bearers or logical channels of the terminal is less than or equal to the second PSI threshold, it is indicated that the network is no longer congested. The terminal determines to exit the congestion management state and ceases data discard based on the PSI for the target radio bearers or logical channels of the terminal.

According to an embodiment of the present application, there is provided a method for exiting a congestion management state. The terminal exits the congestion management state based on the difference between the PSI of the target QoS flow, target radio bearer, or target logical channel and the second PSI threshold, which ensures that when the network is no longer congested, the terminal ceases data discard based on the PSI, thereby avoiding unnecessary data discard and improving user experience.

The solution in the embodiments of the present application is further described below through several specific examples.

Example 1: The terminal exits the congestion management state based on the first indication information of the network device.

Step 1: The terminal enters the congestion management state.

In an embodiment, the terminal receives the indication information transmitted from the network device indicating that the network is congested. The indication information may be carried through RRC signaling or MAC signaling.

In an embodiment, it further includes: in the case where the network device is configured with a first PSI threshold, if the network is congested, the terminal performs data discard based on the first PSI threshold. For example, in the case where the network is congested, the terminal discards PDU Sets with PSI values greater than the first PSI threshold. For example, in the case where the network is congested, the terminal discards PDU Sets with PSI values greater than or equal to the first PSI threshold.

Step 2: The network device transmits the first indication information to the terminal.

In an embodiment, when the network device determines that the network is no longer in a congested state, it transmits the first indication information to the terminal. The first indication information is configured to indicate the congestion state of the network, or to indicate the terminal to exit the congestion management state.

In an embodiment, the congestion state of the network may be identified by at least one of:
total resource occupancy of all serving cells accessed by the terminal;
average resource occupancy of all serving cells accessed by the terminal;
resource occupancy of each serving cell accessed by the terminal;
1-bit information, configured to indicate the congestion state of the network (For example, if the value of the bit is "1", it is indicated that the network is congested, and the value of "0" indicates that the network is non-congested. For example, if the value of the bit is "1", it is indicated that the network is non-congested, and the value of "0" indicates that the network is congested);
N-bit information, each bit of which is configured to indicate a congestion state of a serving cell accessed by the terminal; or
a second PSI threshold. In an embodiment, the terminal compares the PSI of the target QoS flow with the second PSI threshold. If the PSI of the target QoS flow is less than the second PSI threshold, or if the PSI of the target QoS flow is less than or equal to the second PSI threshold, it is indicated that the network is no longer congested.

Step 3: The terminal determines whether to exit the congestion management state.

The terminal receives the first indication information transmitted from the network device and determines whether to exit the congestion management state based on the first indication information.

For example, if the first indication information indicates that the congestion state of the network is "non-congested", or if the first indication information indicates that the resource occupancy is lower than the given threshold, the terminal determines to exit the congestion management state.

If the terminal determines to exit the congestion management state, at least one of the following operations is performed:
ceasing the discarding of PDU Sets based on the PSI;
ceasing the discarding of PDU Sets based on the PSI for the target QoS flow;
ceasing the discarding of PDU Sets based on the PSI for the target radio bearer or logical channel containing the target QoS flow.

Example 2: The terminal determines whether it needs to exit the congestion management state.

Step 1: The terminal enters the congestion management state.

In an embodiment, the terminal receives the indication information transmitted from the network device indicating that the network is congested. The indication information may be carried through RRC signaling or MAC signaling.

In an embodiment, it further includes: in the case where the network device is configured with a first PSI threshold, if the network is congested, the terminal performs data discard based on the first PSI threshold. For example, in the case where the network is congested, the terminal discards PDU Sets with PSI values greater than the first PSI threshold. For example, in the case where the network is congested, the terminal discards PDU Sets with PSI values greater than or equal to the first PSI threshold.

Step 2: The terminal determines whether the given condition is met.

The given condition includes at least one of the following.

A volume of data in a current buffer is less than a first given threshold, or a volume of data in a current buffer is less than or equal to a first given threshold. In an embodiment, the first given threshold is predefined by the protocol or configured by the network device.

The terminal receives an uplink grant transmitted from the network device during the time period of [M-T, M], where M is the current time and T is an integer greater than or equal to 0. The value of T may be predefined by the protocol or configured by the network device.

Step 3: If the given condition is met, the terminal exits the congestion management state.

After the determination in step 2, if the determination result meets the given condition, the terminal exits the congestion management state and performs at least one of the following operations:
ceasing the discarding of PDU Sets based on the PSI;
ceasing the discarding of PDU Sets based on the PSI for the target QoS flow; or
ceasing the discarding of PDU Sets based on the PSI for the target radio bearer or logical channel containing the target QoS flow.

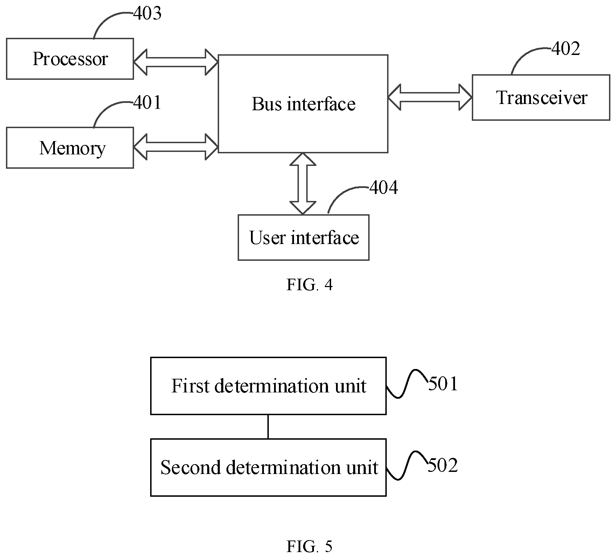

FIG. 4 is a structural schematic diagram of a terminal according to an embodiment of the present application. As shown in FIG. 4, the terminal includes a memory 401, a transceiver 402, and a processor 403.

The memory 401 is configured to store a computer program, and the transceiver 402 is configured to transmit and receive data under the control of the processor 403.

In an embodiment, the transceiver 402 is configured to receive and transmit data under the control of the processor 403.

In an embodiment, as shown in FIG. 4, a bus architecture may include any number of interconnected buses and bridges, specifically linked together by various circuits of one or more processors represented by the processor 403 and a memory represented by the memory 401. The bus architecture may further link various other circuits together, such as a peripheral device, a voltage regulator, and a power management circuit, which are well known in the art and are therefore not further described herein. A bus interface provides an interface. The transceiver 400 may include a plurality of components, i.e., may include a transmitter and a receiver, providing a unit for communicating with various other devices on a transmission medium, such as a radio channel, a wired channel, an optical cable, and the like. For different user devices, the user interface 404 may also be an interface capable of externally or internally connecting to required devices, and the connected devices include, but are not limited to, a keypad, a display, a speaker, a microphone, a joystick, and the like.

The processor 403 is responsible for managing the bus architecture and general processing, and the memory 401 may store data used by the processor 403 when performing operations.

In some embodiments, the processor 403 may be a Central Processing Unit (CPU), an Application-Specific Integrated Circuit (ASIC), a Field-Programmable Gate Array (FPGA), or a Complex Programmable Logic Device (CPLD), and the processor may also employ a multi-core architecture.

The processor calls the computer program stored in the memory to execute any of the methods provided in the embodiments of the present application according to the obtained executable instructions. The processor and the memory may also be physically separated in arrangement.

The processor 403 is configured to read the computer program from the memory 401 and perform operations of:
determining to exit the congestion management state based on first indication information transmitted from a network device; or
determining to exit the congestion management state in a case where a given condition is met,
where the first indication information is configured to indicate a congestion state of a network, or the first indication information is configured to indicate a terminal to exit the congestion management state.

In some embodiments, the given condition includes at least one of:
a volume of data in a current buffer is less than a first given threshold, or a volume of data in a current buffer is less than or equal to a first given threshold, where the first given threshold is predefined by a protocol or configured by the network device; or
an uplink grant transmitted from the network device has been received within a given time period.

In some embodiments, the volume of data in the current buffer is:
a total volume of data in the current buffer; or
a volume of data in the current buffer corresponding to a logical channel or a logical channel group with a highest priority; or
a total volume of data in the current buffer corresponding to a logical channel or a logical channel group containing a packet data unit set; or
a volume of data in the current buffer corresponding to a logical channel or a logical channel group with a highest priority containing a packet data unit set.

In some embodiments, determining to exit the congestion management state based on the first indication information transmitted from the network device in the case where the first indication information is configured to indicate the congestion state of the network, includes at least one of:
determining to exit the congestion management state in a case where the first indication information indicates that the congestion state of the network is non-congested;
determining to exit the congestion management state in a case where the first indication information indicates that total resource occupancy of all serving cells accessed by the terminal is less than a second given threshold, or the first indication information indicates that total resource occupancy of all serving cells accessed by the terminal is less than or equal to a second given threshold;
determining to exit the congestion management state in a case where the first indication information indicates that average resource occupancy of all serving cells accessed by the terminal is less than a third given threshold, or the first indication information indicates that average resource occupancy of all serving cells accessed by the terminal is less than or equal to a third given threshold;
determining to exit the congestion management state in a case where the first indication information indicates resource occupancy of each serving cell accessed by the terminal, and it is determined based on the first indication information that total resource occupancy of all serving cells accessed by the terminal is less than a second given threshold, or it is determined based on the first indication information that total resource occupancy of all serving cells accessed by the terminal is less than or equal to a second given threshold;
determining to exit the congestion management state in a case where the first indication information indicates resource occupancy of each serving cell accessed by the terminal, and it is determined based on the first indication information that average resource occupancy of all serving cells accessed by the terminal is less than a third given threshold, or it is determined based on the first indication information that average resource occupancy of all serving cells accessed by the terminal is less than or equal to a third given threshold; or
determining to exit the congestion management state in a case where the first indication information indicates resource occupancy of each serving cell accessed by the terminal, and resource occupancy of at least one serving cell in all serving cells accessed by the terminal is less than a fourth given threshold, or resource occupancy of at least one serving cell in all serving cells accessed by the terminal is less than or equal to a fourth given threshold,
where the second given threshold is predefined by a protocol or configured by the network device, the third given threshold is predefined by a protocol or configured by the network device, and the fourth given threshold is predefined by a protocol or configured by the network device.

In some embodiments, exiting the congestion management state includes at least one of:
ceasing data discard based on packet data unit set importance;
ceasing data discard based on packet data unit set importance for target service;
ceasing data discard based on packet data unit importance for a target quality of service flow; or
ceasing data discard based on packet data unit importance for a target radio bearer or a logical channel.

In some embodiments, the processor 403 is configured to read the computer program from the memory 401 and further perform operation of:
performing data discard based on a first packet data unit set importance threshold,
where the first packet data unit set importance threshold is predefined by a protocol or configured by the network device.

In some embodiments, a content of the first indication information includes at least one of:
total resource occupancy of all serving cells accessed by the terminal;
average resource occupancy of all serving cells accessed by the terminal;
resource occupancy of each serving cell accessed by the terminal;
1-bit information, configured to indicate the congestion state of the network;
N-bit information, each bit of which is configured to indicate a congestion state of a serving cell accessed by the terminal; or
a second packet data unit set importance threshold.

In some embodiments, determining to exit the congestion management state based on the first indication information transmitted from the network device in the case where the first indication information includes the second packet data unit set importance threshold, includes at least one of:
determining to exit the congestion management state in a case where packet data unit set importance of a target quality of service flow is less than the second packet data unit set importance threshold, or packet data unit set importance of a target quality of service flow is less than or equal to the second packet data unit set importance threshold; or
determining to exit the congestion management state in a case where packet data unit set importance corresponding to all logical channels or radio bearers in the terminal is less than the second packet data unit set importance threshold, or packet data unit set importance corresponding to all logical channels or radio bearers in the terminal is less than or equal to the second packet data unit set importance threshold.

In some embodiments, the second packet data unit set importance threshold is the same as the first packet data unit set importance threshold.

In an embodiment, being configured by the network device includes:
being configured by a radio resource control signaling, a medium access control-control element signaling, or a physical layer signaling transmitted from the network device.

It should be noted that the above-mentioned terminal provided in the embodiment of the present application may implement all the methods and steps implemented by the embodiments in the method, and may achieve the same effects. The parts of the embodiment that are identical to the embodiments in the method and the beneficial effects thereof will not be repeated in detail herein.

FIG. 5 is a structural schematic diagram of an apparatus for exiting a congestion management state according to an embodiment of the present application. As shown in FIG. 5, the apparatus includes:
a first determination unit 501, configured to determine to exit the congestion management state based on first indication information transmitted from a network device; or
a second determination unit 502, configured to determine to exit the congestion management state in a case where a given condition is met,
where the first indication information is configured to indicate a congestion state of a network, or the first indication information is configured to indicate a terminal to exit the congestion management state.

In some embodiments, the given condition includes at least one of:
a volume of data in a current buffer is less than a first given threshold, or a volume of data in a current buffer is less than or equal to a first given threshold, where the first given threshold is predefined by a protocol or configured by the network device; or
an uplink grant transmitted from the network device has been received within a given time period.

In some embodiments, the volume of data in a current buffer is:
a total volume of data in the current buffer; or
a volume of data in the current buffer corresponding to a logical channel or a logical channel group with a highest priority; or
a total volume of data in the current buffer corresponding to a logical channel or a logical channel group containing a packet data unit set; or
a volume of data in the current buffer corresponding to a logical channel or a logical channel group with a highest priority containing a packet data unit set.

In some embodiments, in the case where the first indication information is configured to indicate the congestion state of the network, the first determination unit 501 includes at least one of:
a first determination module, configured to determine to exit the congestion management state in a case where the first indication information indicates that the congestion state of the network is non-congested;
a second determination module, configured to determine to exit the congestion management state in a case where the first indication information indicates that total resource occupancy of all serving cells accessed by the terminal is less than a second given threshold, or the first indication information indicates that total resource occupancy of all serving cells accessed by the terminal is less than or equal to a second given threshold;
a third determination module, configured to determine to exit the congestion management state in a case where the first indication information indicates that average resource occupancy of all serving cells accessed by the terminal is less than a third given threshold, or the first indication information indicates that average resource occupancy of all serving cells accessed by the terminal is less than or equal to a third given threshold;
a fourth determination module, configured to determine to exit the congestion management state in a case where the first indication information indicates resource occupancy of each serving cell accessed by the terminal, and it is determined based on the first indication information that total resource occupancy of all serving cells accessed by the terminal is less than a second given threshold, or it is determined based on the first indication information that total resource occupancy of all serving cells accessed by the terminal is less than or equal to a second given threshold;;
a fifth determination module, configured to determine to exit the congestion management state in a case where the first indication information indicates resource occupancy of each serving cell accessed by the terminal, and it is determined based on the first indication information that average resource occupancy of all serving cells accessed by the terminal is less than a third given threshold, or it is determined based on the first indication information that average resource occupancy of all serving cells accessed by the terminal is less than or equal to a third given threshold; and
a sixth determination module, configured to determine to exit the congestion management state in a case where the first indication information indicates resource occupancy of each serving cell accessed by the terminal, and resource occupancy of at least one serving cell in all serving cells accessed by the terminal is less than a fourth given threshold, or resource occupancy of at least one serving cell in all serving cells accessed by the terminal is less than or equal to a fourth given threshold,
where the second given threshold is predefined by a protocol or configured by the network device, the third given threshold is predefined by a protocol or configured by the network device, and the fourth given threshold is predefined by a protocol or configured by the network device.

In some embodiments, exiting the congestion management state includes at least one of:
ceasing data discard based on packet data unit set importance;
ceasing data discard based on packet data unit set importance for target service;
ceasing data discard based on packet data unit importance for a target quality of service flow; or
ceasing data discard based on packet data unit importance for a target radio bearer or a logical channel.

In some embodiments, the apparatus further includes:
a discarding unit, configured to perform data discard based on a first packet data unit set importance threshold,
where the first packet data unit set importance threshold is predefined by a protocol or configured by the network device.

In some embodiments, a content of the first indication information includes at least one of:
total resource occupancy of all serving cells accessed by the terminal;
average resource occupancy of all serving cells accessed by the terminal;
resource occupancy of each serving cell accessed by the terminal;
1-bit information, configured to indicate the congestion state of the network;
N-bit information, each bit of which is configured to indicate a congestion state of a serving cell accessed by the terminal; or
a second packet data unit set importance threshold.

In some embodiments, in the case where the first indication information comprises the second packet data unit set importance threshold, the first determination unit 501 includes at least one of:
a seventh determination module, configured to determine to exit the congestion management state in a case where packet data unit set importance of a target quality of service flow is less than the second packet data unit set importance threshold, or packet data unit set importance of a target quality of service flow is less than or equal to the second packet data unit set importance threshold; or
an eighth determination module, configured to determine to exit the congestion management state in a case where packet data unit set importance corresponding to all logical channels or radio bearers in the terminal is less than the second packet data unit set importance threshold, or packet data unit set importance corresponding to all logical channels or radio bearers in the terminal is less than or equal to the second packet data unit set importance threshold.

In some embodiments, the second packet data unit set importance threshold is the same as the first packet data unit set importance threshold.

In some embodiments, being configured by the network device includes:
being configured by a radio resource control signaling, a medium access control-control element signaling, or a physical layer signaling transmitted from the network device.

The method and the apparatus in various embodiments of the present application are based on the same concept. Since the principles of solving problems by the method and the apparatus are similar, therefore, the implementation of the method and the apparatus may refer to each other, and the repeated description will not be provided.

It should be noted that the division of units in the embodiments of the present application is illustrative and merely represents a logical functional division. In actual implementation, other division ways may be employed. In addition, the functional units in various embodiments of the present application may be integrated into a single processing unit, or each unit may exist physically as a separate unit, or two or more units may be integrated into a single unit. The aforementioned integrated unit may be implemented in the form of either hardware or a software functional unit.

If the integrated unit is implemented in the form of a software functional unit and sold or used as an independent product, it may be stored in a processor-readable storage medium. Based on this understanding, the solution of the present application, or the part that contributes to the related art, or all or part of the solution, may be embodied in the form of a software product. The computer software product is stored in a storage medium and includes several instructions for enabling a computer device (which may be a personal computer, a server, or a network device, and the like) or a processor to execute all or part of the steps of the method described in each embodiment of the present application. The aforementioned storage medium includes a USB flash drive, a mobile hard disk, a Read-Only Memory (ROM), a Random Access Memory (RAM), a disk or optical disk, and other media that may store program codes.

It should be noted that the above-mentioned apparatus provided in the embodiment of the present application may implement all the methods and steps implemented by the embodiments in the method, and may achieve the same effects. The parts of the embodiment that are identical to the embodiments in the method and the beneficial effects thereof will not be repeated in detail herein.

According to an embodiment of the present application, there is provided a non-transitory readable storage medium storing a computer program, which is configured to cause a processor to execute the method for exiting the congestion management state provided by the embodiments described above. The method includes:
determining to exit the congestion management state based on first indication information transmitted from a network device; or
determining to exit the congestion management state in a case where a given condition is met,
where the first indication information is configured to indicate a congestion state of a network, or the first indication information is configured to indicate a terminal to exit the congestion management state.

The non-transitory readable storage medium may be any available medium or data storage device that is non-transitory and can be accessed, including but not limited to a disk memory (such as a floppy disk, a hard disk, a magnetic tape, a magneto-optical disk (MO), and the like), an optical memory (such as a CD, a DVD, a BD, a HVD, and the like), and a semiconductor memory (such as a ROM, a EPROM, a EEPROM, a non-volatile memory (NAND FLASH), and a solid-state drive (SSD)), and the like.

Those skilled in the art may understand that the embodiments of the present application may be provided as methods, systems, or computer program products. Thus, the embodiment of the present application may be in the form of complete hardware, complete software, or a combination of software and hardware. Furthermore, the present application may take the form of a computer program product implemented on one or more computer-usable storage media (including but not limited to a disk memory, an optical memory, and the like) containing computer-usable program code.

The present application is described with reference to flowcharts and/or block diagrams of methods, devices (systems), and computer program products according to the embodiments of the present application. It should be understood that each process and/or block in the flowcharts and/or block diagrams, as well as combinations of processes and/or blocks in the flowcharts and/or block diagrams, may be implemented by computer-executable instructions. These computer-executable instructions may be provided to a processor of a general-purpose computer, a special-purpose computer, an embedded processor, or other programmable data processing device to produce a machine, so that the instructions executed by the processor of the computer or other programmable data processing device produce an apparatus for implementing the functions specified in one or more processes in the flowcharts and/or one or more blocks in the block diagrams.

These processor-executable instructions may also be stored in a processor-readable memory that may direct a computer or other programmable data processing device to operate in a specific manner, so that the instructions stored in the processor-readable memory produce a product including an instruction apparatus that implements the functions specified in one or more processes in the flowcharts and/or one or more blocks in the block diagrams.

These processor-executable instructions may also be loaded onto a computer or other programmable data processing device, so that a series of operational steps are executed on the computer or other programmable device to produce a process implemented by a computer, so that the instructions executed on the computer or other programmable device provide steps for implementing the functions specified in one or more processes in the flowcharts and/or one or more blocks in the block diagrams.

It may be apparent that those skilled in the art may make various modifications and variations to the present application without departing from the scope of the present application. Thus, if such modifications and variations fall within the scope of the claims of the present application and their equivalents, the present application is intended to encompass such modifications and variations.

## Claims

1. A method for exiting a congestion management state, comprising:
determining to exit the congestion management state based on first indication information transmitted from a network device; or
determining to exit the congestion management state in a case where a given condition is met,
wherein the first indication information is configured to indicate a congestion state of a network, or the first indication information is configured to indicate a terminal to exit the congestion management state.

2. The method of claim 1, wherein the given condition comprises at least one of:
a volume of data in a current buffer is less than a first given threshold, or a volume of data in a current buffer is less than or equal to a first given threshold, wherein the first given threshold is predefined by a protocol or configured by the network device; or
an uplink grant transmitted from the network device has been received within a given time period.

3. The method of claim 2, wherein the volume of data in the current buffer is:
a total volume of data in the current buffer; or
a volume of data in the current buffer corresponding to a logical channel or logical channel group with a highest priority; or
a total volume of data in the current buffer corresponding to a logical channel or a logical channel group containing a packet data unit set; or
a volume of data in the current buffer corresponding to a logical channel or a logical channel group with a highest priority containing a packet data unit set.

4. The method of claim 1, wherein determining to exit the congestion management state based on the first indication information transmitted from the network device in the case where the first indication information is configured to indicate the congestion state of the network, comprises at least one of:
determining to exit the congestion management state in a case where the first indication information indicates that the congestion state of the network is non-congested;
determining to exit the congestion management state in a case where the first indication information indicates that total resource occupancy of all serving cells accessed by the terminal is less than a second given threshold, or the first indication information indicates that total resource occupancy of all serving cells accessed by the terminal is less than or equal to a second given threshold;
determining to exit the congestion management state in a case where the first indication information indicates that average resource occupancy of all serving cells accessed by the terminal is less than a third given threshold, or the first indication information indicates that average resource occupancy of all serving cells accessed by the terminal is less than or equal to a third given threshold;
determining to exit the congestion management state in a case where the first indication information indicates resource occupancy of each serving cell accessed by the terminal, and it is determined based on the first indication information that total resource occupancy of all serving cells accessed by the terminal is less than a second given threshold, or it is determined based on the first indication information that total resource occupancy of all serving cells accessed by the terminal is less than or equal to a second given threshold;
determining to exit the congestion management state in a case where the first indication information indicates resource occupancy of each serving cell accessed by the terminal, and it is determined based on the first indication information that average resource occupancy of all serving cells accessed by the terminal is less than a third given threshold, or it is determined based on the first indication information that average resource occupancy of all serving cells accessed by the terminal is less than or equal to a third given threshold; or
determining to exit the congestion management state in a case where the first indication information indicates resource occupancy of each serving cell accessed by the terminal, and resource occupancy of at least one serving cell in all serving cells accessed by the terminal is less than a fourth given threshold, or resource occupancy of at least one serving cell in all serving cells accessed by the terminal is less than or equal to a fourth given threshold,
wherein the second given threshold is predefined by a protocol or configured by the network device, the third given threshold is predefined by a protocol or configured by the network device, and the fourth given threshold is predefined by a protocol or configured by the network device.

5. The method of any of claims 1 to 4, wherein exiting the congestion management state comprises at least one of:
ceasing data discard based on packet data unit set importance;
ceasing data discard based on packet data unit set importance for target service;
ceasing data discard based on packet data unit importance for a target quality of service flow; or
ceasing data discard based on packet data unit importance for a target radio bearer or a logical channel.

6. The method of claim 1, further comprising:
performing data discard based on a first packet data unit set importance threshold,
wherein the first packet data unit set importance threshold is predefined by a protocol or configured by the network device.

7. The method of any of claims 1 to 6, wherein a content of the first indication information comprises at least one of:
total resource occupancy of all serving cells accessed by the terminal;
average resource occupancy of all serving cells accessed by the terminal;
resource occupancy of each serving cell accessed by the terminal;
1-bit information, configured to indicate the congestion state of the network;
N-bit information, each bit of which is configured to indicate a congestion state of a serving cell accessed by the terminal; or
a second packet data unit set importance threshold.

8. The method of claim 7, wherein determining to exit the congestion management state based on the first indication information transmitted from the network device in the case where the first indication information comprises the second packet data unit set importance threshold, comprises at least one of:
determining to exit the congestion management state in a case where packet data unit set importance of a target quality of service flow is less than the second packet data unit set importance threshold, or packet data unit set importance of a target quality of service flow is less than or equal to the second packet data unit set importance threshold; or
determining to exit the congestion management state in a case where packet data unit set importance corresponding to all logical channels or radio bearers in the terminal is less than the second packet data unit set importance threshold, or packet data unit set importance corresponding to all logical channels or radio bearers in the terminal is less than or equal to the second packet data unit set importance threshold.

9. The method of claim 7 or 8, wherein the second packet data unit set importance threshold is the same as the first packet data unit set importance threshold.

10. The method of claim 2, 4, or 6, wherein being configured by the network device comprises:
being configured by a radio resource control signaling, a medium access control-control element signaling, or a physical layer signaling transmitted from the network device.

11. A terminal comprising a memory, a transceiver, and a processor, wherein
the memory is configured to store a computer program; the transceiver is configured to transmit and receive data under control of the processor; and the processor is configured to read the computer program from the memory and perform operations of:
determining to exit a congestion management state based on first indication information transmitted from a network device; or
determining to exit a congestion management state in a case where a given condition is met,
wherein the first indication information is configured to indicate a congestion state of a network, or the first indication information is configured to indicate the terminal to exit the congestion management state.

12. The terminal of claim 11, wherein the given condition comprises at least one of:
a volume of data in a current buffer is less than a first given threshold, or a volume of data in a current buffer is less than or equal to a first given threshold, wherein the first given threshold is predefined by a protocol or configured by the network device; or
an uplink grant transmitted from the network device has been received within a given time period.

13. The terminal of claim 12, wherein the volume of data in the current buffer is:
a total volume of data in the current buffer; or
a volume of data in the current buffer corresponding to a logical channel or a logical channel group with a highest priority; or
a total volume of data in the current buffer corresponding to a logical channel or a logical channel group containing a packet data unit set; or
a volume of data in the current buffer corresponding to a logical channel or a logical channel group with a highest priority containing a packet data unit set.

14. The terminal of claim 11, wherein determining to exit the congestion management state based on the first indication information transmitted from the network device in the case where the first indication information is configured to indicate the congestion state of the network, comprises at least one of:
determining to exit the congestion management state in a case where the first indication information indicates that the congestion state of the network is non-congested;
determining to exit the congestion management state in a case where the first indication information indicates that total resource occupancy of all serving cells accessed by the terminal is less than a second given threshold, or the first indication information indicates that total resource occupancy of all serving cells accessed by the terminal is less than or equal to a second given threshold;
determining to exit the congestion management state in a case where the first indication information indicates that average resource occupancy of all serving cells accessed by the terminal is less than a third given threshold, or the first indication information indicates that average resource occupancy of all serving cells accessed by the terminal is less than or equal to a third given threshold;
determining to exit the congestion management state in a case where the first indication information indicates resource occupancy of each serving cell accessed by the terminal, and it is determined based on the first indication information that total resource occupancy of all serving cells accessed by the terminal is less than a second given threshold, or it is determined based on the first indication information that total resource occupancy of all serving cells accessed by the terminal is less than or equal to a second given threshold;
determining to exit the congestion management state in a case where the first indication information indicates resource occupancy of each serving cell accessed by the terminal, and it is determined based on the first indication information that average resource occupancy of all serving cells accessed by the terminal is less than a third given threshold, or it is determined based on the first indication information that average resource occupancy of all serving cells accessed by the terminal is less than or equal to a third given threshold; or
determining to exit the congestion management state in a case where the first indication information indicates resource occupancy of each serving cell accessed by the terminal, and resource occupancy of at least one serving cell in all serving cells accessed by the terminal is less than a fourth given threshold, or resource occupancy of at least one serving cell in all serving cells accessed by the terminal is less than or equal to a fourth given threshold,
wherein the second given threshold is predefined by a protocol or configured by the network device, the third given threshold is predefined by a protocol or configured by the network device, and the fourth given threshold is predefined by a protocol or configured by the network device.

15. The terminal of any of claims 11 to 14, wherein exiting the congestion management state comprises at least one of:
ceasing data discard based on packet data unit set importance;
ceasing data discard based on packet data unit set importance for target service;
ceasing data discard based on packet data unit importance for a target quality of service flow; or
ceasing data discard based on packet data unit importance for a target radio bearer or a logical channel.

16. The terminal of claim 11, wherein the processor is configured to read the computer program in the memory and further perform operations of:
performing data discard based on a first packet data unit set importance threshold,
wherein the first packet data unit set importance threshold is predefined by a protocol or configured by the network device.

17. The terminal of any of claims 11 to 16, wherein a content of the first indication information comprises at least one of:
total resource occupancy of all serving cells accessed by the terminal;
average resource occupancy of all serving cells accessed by the terminal;
resource occupancy of each serving cell accessed by the terminal;
1-bit information, configured to indicate the congestion state of the network;
N-bit information, each bit of which is configured to indicate a congestion state of a serving cell accessed by the terminal; or
a second packet data unit set importance threshold.

18. The terminal of claim 17, wherein determining to exit the congestion management state based on the first indication information transmitted from the network device in the case where the first indication information comprises the second packet data unit set importance threshold, comprises at least one of:
determining to exit the congestion management state in a case where packet data unit set importance of a target quality of service flow is less than the second packet data unit set importance threshold, or packet data unit set importance of a target quality of service flow is less than or equal to the second packet data unit set importance threshold; or
determining to exit the congestion management state in a case where packet data unit set importance corresponding to all logical channels or radio bearers in the terminal is less than the second packet data unit set importance threshold, or packet data unit set importance corresponding to all logical channels or radio bearers in the terminal is less than or equal to the second packet data unit set importance threshold.

19. The terminal of claim 17 or 18, wherein the second packet data unit set importance threshold is the same as the first packet data unit set importance threshold.

20. The terminal of claim 12, 14, or 16, wherein being configured by the network device comprises:
being configured by a radio resource control signaling, a medium access control-control element signaling, or a physical layer signaling transmitted from the network device.

21. An apparatus for exiting a congestion management state, comprising:
a first determination unit, configured to determine to exit the congestion management state based on first indication information transmitted from a network device; or
a second determination unit, configured to determine to exit the congestion management state in a case where a given condition is met,
wherein the first indication information is configured to indicate a congestion state of a network, or the first indication information is configured to indicate a terminal to exit the congestion management state.

22. The apparatus for exiting the congestion management state of claim 21, wherein the given condition comprises at least one of:
a volume of data in a current buffer is less than a first given threshold, or a volume of data in a current buffer is less than or equal to a first given threshold, wherein the first given threshold is predefined by a protocol or configured by the network device; or
an uplink grant transmitted from the network device has been received within a given time period.

23. The apparatus for exiting the congestion management state of claim 22, wherein the volume of data in a current buffer is:
a total volume of data in the current buffer; or
a volume of data in the current buffer corresponding to a logical channel or a logical channel group with a highest priority; or
a total volume of data in the current buffer corresponding to a logical channel or a logical channel group containing a packet data unit set; or
a volume of data in the current buffer corresponding to a logical channel or a logical channel group with a highest priority containing a packet data unit set.

24. The apparatus for exiting the congestion management state of any of claims 21 to 23, wherein in the case where the first indication information is configured to indicate the congestion state of the network, the first determination unit comprises at least one of:
a first determination module, configured to determine to exit the congestion management state in a case where the first indication information indicates that the congestion state of the network is non-congested;
a second determination module, configured to determine to exit the congestion management state in a case where the first indication information indicates that total resource occupancy of all serving cells accessed by the terminal is less than a second given threshold, or the first indication information indicates that total resource occupancy of all serving cells accessed by the terminal is less than or equal to a second given threshold;
a third determination module, configured to determine to exit the congestion management state in a case where the first indication information indicates that average resource occupancy of all serving cells accessed by the terminal is less than a third given threshold, or the first indication information indicates that average resource occupancy of all serving cells accessed by the terminal is less than or equal to a third given threshold;
a fourth determination module, configured to determine to exit the congestion management state in a case where the first indication information indicates resource occupancy of each serving cell accessed by the terminal, and it is determined based on the first indication information that total resource occupancy of all serving cells accessed by the terminal is less than a second given threshold, or it is determined based on the first indication information that total resource occupancy of all serving cells accessed by the terminal is less than or equal to a second given threshold;
a fifth determination module, configured to determine to exit the congestion management state in a case where the first indication information indicates resource occupancy of each serving cell accessed by the terminal, and it is determined based on the first indication information that average resource occupancy of all serving cells accessed by the terminal is less than a third given threshold, or it is determined based on the first indication information that average resource occupancy of all serving cells accessed by the terminal is less than or equal to a third given threshold;
a sixth determination module, configured to determine to exit the congestion management state in a case where the first indication information indicates resource occupancy of each serving cell accessed by the terminal, and resource occupancy of at least one serving cell in all serving cells accessed by the terminal is less than a fourth given threshold, or resource occupancy of at least one serving cell in all serving cells accessed by the terminal is less than or equal to a fourth given threshold,
wherein the second given threshold is predefined by a protocol or configured by the network device, the third given threshold is predefined by a protocol or configured by the network device, and the fourth given threshold is predefined by a protocol or configured by the network device.

25. The apparatus for exiting the congestion management state of any of claims 21 to 23, wherein exiting the congestion management state comprises at least one of:
ceasing data discard based on packet data unit set importance;
ceasing data discard based on packet data unit set importance for target service;
ceasing data discard based on packet data unit importance for a target quality of service flow; or
ceasing data discard based on packet data unit importance for a target radio bearer or a logical channel.

26. The apparatus for exiting the congestion management state of any of claims 21 to 23, further comprising:
a discarding unit, configured to perform data discard based on a first packet data unit set importance threshold,
wherein the first packet data unit set importance threshold is predefined by a protocol or configured by the network device.

27. The apparatus for exiting the congestion management state of any of claims 21 to 23, wherein a content of the first indication information comprises at least one of:
total resource occupancy of all serving cells accessed by the terminal;
average resource occupancy of all serving cells accessed by the terminal;
resource occupancy of each serving cell accessed by the terminal;
1-bit information, configured to indicate the congestion state of the network;
N-bit information, each bit of which is configured to indicate a congestion state of a serving cell accessed by the terminal; or
a second packet data unit set importance threshold.

28. The apparatus for exiting the congestion management state of any of claims 21 to 23, wherein in the case where the first indication information comprises the second packet data unit set importance threshold, the first determination unit comprises at least one of:
a seventh determination module, configured to determine to exit the congestion management state in a case where packet data unit set importance of a target quality of service flow is less than the second packet data unit set importance threshold, or packet data unit set importance of a target quality of service flow is less than or equal to the second packet data unit set importance threshold; or
an eighth determination module, configured to determine to exit the congestion management state in a case where packet data unit set importance corresponding to all logical channels or radio bearers in the terminal is less than the second packet data unit set importance threshold, or a packet data unit set importance corresponding to all logical channels or radio bearers in the terminal is less than or equal to the second packet data unit set importance threshold.

29. The apparatus for exiting the congestion management state of claim 28, wherein the second packet data unit set importance threshold is the same as the first packet data unit set importance threshold.

30. The apparatus for exiting the congestion management state of claim 26, wherein being configured by the network device comprises:
being configured by a radio resource control signaling, a medium access control-control element signaling, or a physical layer signaling transmitted from the network device.

31. A non-transitory readable storage medium storing a computer program which is configured to cause a computer to execute the method of any of claims 1 to 10.
